# EUROPEAN PATENT APPLICATION

(11) **EP 4 841 700 A1**
(43) Date of publication of application: **18.11.2026**
(21) Application number: 25869564.2
(22) Date of filing: 20.10.2025
(51) Int. Cl.: H01M 4/36, H01M 4/38, H01M 4/48, H01M 4/587, H01M 4/133, H01M 4/134, H01M 4/62, H01M 10/052, H01M 4/02

(54) **ANODE ACTIVE MATERIAL, ANODE COMPOSITION, ANODE COMPRISING SAME, AND SECONDARY BATTERY**

(30) Priority: 22.10.2024 KR 20240145317
(71) Applicant: LG Energy Solution, Ltd., Seoul 07335 (KR)
(72) Inventor: The designation of the inventor has not yet been filed
(74) Representative: Hoffmann Eitle
(86) International application number: PCT/KR2025/016599
(87) International publication number: WO 2026/089406

(57) **Abstract**

Disclosed herein is a negative electrode active material, a negative electrode composition, a negative electrode including the same, a secondary battery including the negative electrode, a battery module, and a battery pack. According to an embodiment of the present disclosure, the negative electrode active material includes a silicon-based active material; and a coating layer provided on the silicon-based active material. The coating layer includes a metal oxide and an aqueous binder.

## Description

### CROSS-REFERENCE TO RELATED APPLICATIONS

This application is based on and claims priority from Korean Patent Application No. 10-2024-0145317 filed on October 22, 2024, with the Korean Intellectual Property Office, the disclosure of which is incorporated herein in its entirety by reference.

### TECHNICAL FIELD

The present disclosure relates to a negative electrode active material, a negative electrode composition, a negative electrode including the same, a secondary battery including the negative electrode, battery module, and a battery pack.

### BACKGROUND

The demand for alternative energy or clean energy is increasing due to the rapid increase in the use of fossil fuels. In response to the demand, one of the most actively researched fields is the field of power generation and power storage using electrochemical reactions. At present, a representative example of electrochemical devices using such electrochemical energy is a secondary battery, and its application range is gradually expanding.

In the meantime, as the technology development and demand for mobile devices increase, the demand for secondary batteries has also increased rapidly. Among the secondary batteries, lithium secondary batteries having a high energy density and voltage, a long cycle life, and a low self-discharge rate have been commercialized and widely used. Also, in order to manufacture an electrode for a high-capacity lithium secondary battery, research is being actively conducted on development of a high-density electrode having a higher energy density per unit volume.

### SUMMARY

The present disclosure provides a technology capable of improving capacity retention and stability of a battery through a surface treatment in which a coating layer is provided on a silicon-based active material.

In an embodiment of the present disclosure, a negative electrode active material includes a silicon-based active material and a coating layer provided on the silicon-based active material, in which the coating layer includes a metal oxide and an aqueous binder.

In another embodiment, a negative electrode composition includes the negative electrode active material according to the present disclosure.

In another embodiment, a negative electrode includes a negative electrode current collector layer and a negative electrode active material layer provided on one surface or both surfaces of the negative electrode current collector layer, in which the negative electrode active material layer includes the negative electrode composition according to the present disclosure.

In another embodiment, a secondary battery includes a positive electrode and the negative electrode according to the present disclosure.

In another embodiment, a battery module or a battery pack includes the secondary battery according to the present disclosure.

In another embodiment, a battery pack includes the battery module according to the present disclosure.

In an embodiment of the present disclosure, the negative electrode active material includes silicon-based particles and a coating layer provided on the silicon-based particles, the coating layer including a metal oxide and an aqueous binder.

In an embodiment of the present disclosure, through the surface treatment in which a coating layer is provided on a silicon-based active material, the negative electrode active material may reduce an exposed surface caused by particle expansion and particle fracture of the silicon-based active material under battery operation environments, thereby improving capacity retention and stability of the battery.

For example, the coating layer may serve as a resistor of the silicon-based active material to mitigate particle fracture.

Furthermore, when the negative electrode active material according to an embodiment of the present disclosure is applied, generation of gas in an aqueous process may be suppressed, thereby facilitating fabrication of the electrode.

### BRIEF DESCRIPTION OF THE DRAWINGS

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 illustrates a negative electrode active material according to an embodiment of the present disclosure.
FIG. 2 illustrates a laminated structure of a negative electrode according to an embodiment of the present disclosure.
FIG. 3 illustrates a laminated structure of a secondary battery according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

Before describing the present disclosure, some terms are first defined.

Through the specification, when a part is said to "include" a component, this does not exclude other components, but rather includes other components, unless otherwise specifically stated.

As used herein, "p to q" means a range of p or more and q or less.

As used herein, the "specific surface area" is measured by the Brunauer-Emmett-Teller (BET) method, and is calculated from the nitrogen gas adsorption amount at liquid nitrogen temperature (77 K) using, for example, BELSORP-mini II manufactured by BEL Japan. For example, in the present disclosure, the BET specific surface area may mean the specific surface area measured by the above-mentioned measurement method. The BET specific surface area may be measured using N₂ in accordance with DIN 66131.

As used herein, "Dn" represents particle size distribution, and means a particle size at the n% point of the cumulative distribution of the number of particles according to particle size. For example, D50 is a particle size (median particle size) at the 50% point of the cumulative distribution of the number of particles according to particle size, D90 is a particle size at the 90% point of the cumulative distribution of the number of particles according to particle size, and D10 is a particle size at the 10% point of the cumulative distribution of the number of particles according to particle size. Meanwhile, the median particle size may be measured using a laser diffraction method. For example, powder to be measured is dispersed in a dispersion medium and introduced into a commercially available laser diffraction particle size measurement device (*e.g.*, Microtrac S3500) to measure the difference in diffraction pattern according to particle size when the particles pass through the laser beam, thereby calculating the particle size distribution.

As used herein, a particle size or particle diameter may refer to an average diameter or a representative diameter of each grain forming the particle powder.

As used herein, the term "particle size (or particle diameter)" may refer to an average diameter or a representative diameter of a particle. The particle may be in the form of a single particle or in the form of a secondary particle in which a plurality of primary particles are agglomerated. In addition, a median particle diameter of a particle may be used in the same sense as an average particle diameter, D50, or particle diameter, and the median particle diameter may denote a size of the particle.

As used herein, the term "particle" may refer to a single particle, a quasi-single particle, or a secondary particle.

As used herein, the term "single particle" may refer to one primary particle and may include a quasi-single particle formed by agglomeration, bonding, or assembly of 30 or fewer primary particles.

As used herein, the term "secondary particle" refers to a particle formed by agglomeration, bonding, or assembly of several tens to several hundreds of primary particles, for example, more than 30 primary particles.

In the present specification, when a polymer contains a certain monomer as a monomer unit, it means that the monomer participates in a polymerization reaction and is contained as a repeating unit in the polymer. In the present specification, when a polymer is said to contain a monomer, it is to be construed as the same as that the polymer contains a monomer as a monomer unit.

As used herein, the term "polymer" is understood to be used in a broad sense to include copolymers unless specified as "homopolymer."

In the present specification, the weight average molecular weight (Mw) and number average molecular weight (Mn) are polystyrene-converted molecular weights measured by gel permeation chromatography (GPC) using monodisperse polystyrene polymers (standard samples) of various degrees of polymerization commercially available for molecular weight measurement as standard materials. In the present specification, unless otherwise specified, molecular weight means weight average molecular weight.

As used herein, tthe terms "about," "approximately," and "substantially" refer to a range of, or approximation to a numerical value or degree, taking into account inherent manufacturing and material tolerances (*e.g.*, ±5%).

In general, a secondary battery is constituted by a positive electrode, a negative electrode, an electrolyte, and a separator. The negative electrode includes a negative electrode active material that inserts and releases lithium ions from the positive electrode, and silicon particles having a large discharge capacity may be used as the negative electrode active material.

In response to the recent increase in demand for high energy density batteries, extensive research has been conducted on methods of increasing capacity by using silicon-based compounds such as Si/C or SiOₓ, which have higher capacity compared to graphite-based materials, as negative electrode active materials. Silicon-based compounds, which are high-capacity materials, have the advantage of greater capacity compared to graphite conventionally used. However, the silicon-based compounds undergo rapid volume expansion during charging, which interrupts conductive pathways and degrades battery characteristics. For example, Japanese Laid-Open Patent Publication No. 2009-080971 discloses the use of polyacrylate as a binder in a graphite-based negative electrode active material layer.

Accordingly, to address problems associated with the use of silicon-based active materials as negative electrode active materials, various approaches have been proposed, such as adjusting the operating potential, additionally coating a thin film on a surface of an active material layer, controlling the content of the silicon-based active material within the negative electrode, suppressing volume expansion itself, or preventing interruption of conductive pathways. However, these approaches may rather degrade battery performance, and thus have limitations in application, and therefore commercialization of negative electrodes containing a high content of silicon-based compounds remains restricted.

In view of these circumstances, the present disclosure provides a technology that improves capacity retention and stability of a lithium secondary battery through a surface treatment in which a coating layer is provided on a silicon-based active material used as a negative electrode active material.

Hereinafter, embodiments of the present disclosure are described in detail to enable one of ordinary skill in the art to which the present disclosure belongs, to easily practice the present disclosure. However, the present disclosure may be implemented in various different forms and is not limited to the following description.

Recently, attempts have continued to apply silicon-based active materials to negative electrodes in order to increase capacity. However, when a silicon-based active material is applied as a negative electrode active material, problems such as volume expansion and gas generation during processing arise, and thus negative electrodes including the silicon-based active material exhibit inferior characteristics in terms of capacity retention and stability.

### Negative Electrode Active Material

In an embodiment of the present disclosure, a negative electrode active material includes a silicon-based active material and a coating layer provided on the silicon-based active material, in which the coating layer includes a metal oxide and an aqueous binder.

By providing the coating layer including a metal oxide and an aqueous binder on the silicon-based active material, exposure of surfaces caused by particle expansion and fracture of the silicon-based active material is reduced, capacity retention and stability of the battery are improved, and generation of undesired gas during processing is suppressed.

In an embodiment of the present disclosure, the silicon-based active material has an average particle diameter (D50) of about 1 µm to 20 µm. For example, the average particle diameter (D50) of the silicon-based active material may be about 1 µm or more, greater than 1 µm, 2 µm or more, or 3 µm or more, and may be 20 µm or less, 15 µm or less, 14 µm or less, 13 µm or less, or 10 µm or less.

In an embodiment of the present disclosure, the silicon-based active material generally has a characteristic BET surface area. The BET surface area of the silicon-based active material is about 0.01 m²/g to 150 m²/g, about 0.1 m²/g to 100 m²/g, about 0.2 m²/g to 80 m²/g, or 0.2 m²/g to 18 m²/g. The BET surface area is measured (using nitrogen) according to DIN 66131.

In an embodiment of the present disclosure, the silicon-based active material includes at least one selected from Si, SiOₓ (0<x<2), Si/C, and Si-alloy.

In an embodiment of the present disclosure, when the silicon-based active material includes Si, the Si is present in an amount of about 70 parts by weight or more based on 100 parts by weight of the silicon-based active material. For example, the Si may be present in an amount of about 70 parts by weight or more, 80 parts by weight or more, 90 parts by weight or more, or 95 parts by weight or more, and about 100 parts by weight or less, less than 100 parts by weight, 99 parts by weight or less, 97 parts by weight or less, or 95 parts by weight or less, based on 100 parts by weight of the silicon-based active material.

In the present disclosure, the Si refers to pure silicon (Si) particles. For example, using pure silicon (Si) particles as the silicon-based active material may mean that, based on 100 parts by weight of the total silicon-based active material, pure Si particles (SiOₓ (x=0)) that are not combined with other particles or elements are included within the above range.

In an embodiment of the present disclosure, the silicon-based active material may be formed of silicon-based particles having 100 parts by weight of Si based on 100 parts by weight of the negative electrode active material, and the silicon-based particles may be in the form of powder.

In an embodiment of the present disclosure, the silicon-based active material may include a metal impurity. In this case, the impurity may be a metal that may be generally included in the silicon-based active material, and may include, for example, about 0.1 parts by weight or less based on 100 parts by weight of the silicon-based active material.

In an embodiment of the present disclosure, the silicon-based active material may include Si/C.

In the present disclosure, the Si/C refers to a silicon-carbon composite. The silicon-carbon composite may be formed of Si and C that are not bonded to each other, but may additionally include other components as needed. For example, the silicon-carbon composite may or may not include silicon carbide (SiC). When the silicon-carbon composite includes silicon carbide, the content thereof is about 3% by weight or less. The silicon-carbon composite may be present in a crystalline state, an amorphous state, or a mixture thereof. In one example, the C in the silicon-carbon composite may be present in an amorphous state.

The silicon-carbon composite may be formed by compounding silicon and carbon, and may form a structure in which a core compounded with silicon and carbon is surrounded by graphite, graphene, or amorphous carbon. In the silicon-carbon composite, the silicon may be nano-silicon.

The silicon-carbon composite may be formed by physically or chemically compounding the carbon and silicon material, and is not limited so long as the carbon and silicon material constitute a composite.

According to an embodiment of the present disclosure, the Si/C may include porous carbon and silicon deposited on the porous carbon. For example, the silicon-carbon composite includes porous carbon particles and silicon particles disposed on a surface of the porous carbon particles or in internal pores thereof.

The silicon particles formed on the surface and in the internal pores of the carbon particles may be silicon nanoparticles, and the silicon nanoparticles may be crystalline, semi-crystalline, amorphous, or a combination thereof.

According to an embodiment of the present disclosure, the silicon-based active material includes a carbon layer disposed on at least a portion of the porous carbon. For example, the carbon layer blocks exposure of silicon on an outer surface of the porous carbon or reduces reactivity of silicon, thereby preventing or suppressing deterioration in lifetime characteristics of the silicon-carbon composite or generation of gas due to contact with water during an aqueous process. In addition, the carbon layer imparts conductivity to the silicon-based active material and may enhance initial efficiency, lifetime characteristics, and capacity characteristics of the secondary battery.

As a non-limiting example, the carbon layer may be formed before formation of a coating layer including the metal oxide and the aqueous binder described below, or may be formed after the coating layer is formed. Accordingly, in the above-described core, the carbon layer may be disposed on a silicon-carbon composite core on which the coating layer is not provided, or on at least a portion of the coating layer previously provided on the silicon-carbon composite core. In addition, the carbon layer may completely surround the coating layer or may be formed only on a portion of the coating layer, and thus both the coating layer and the carbon layer may be observed on a surface of the negative electrode active material.

According to an embodiment of the present disclosure, the carbon layer may be formed after formation of a coating layer including a metal oxide and an aqueous binder described below. For example, the coating layer may be disposed on at least a portion of a carbon layer previously provided on a silicon-carbon composite core. In addition, the coating layer may completely surround the carbon layer or may be formed only on a portion of the carbon layer, and thus both the coating layer and the carbon layer may be observed on a surface of the negative electrode active material.

In an embodiment of the present disclosure, the carbon layer may include at least one selected from amorphous carbon and crystalline carbon.

According to an embodiment, the carbon layer may be an amorphous carbon layer. The amorphous carbon maintains appropriate strength of the carbon layer and suppresses expansion of the silicon-carbon composite. In addition, the carbon layer may further include crystalline carbon, or may not include crystalline carbon.

The crystalline carbon may enhance conductivity of the negative electrode active material. The crystalline carbon may include at least one selected from fullerene, carbon nanotubes, and graphene.

The amorphous carbon maintains appropriate strength of the carbon layer and suppresses expansion of the silicon-carbon composite. The amorphous carbon may be a carbonaceous material formed by carbonization of at least one selected from tar, pitch, and other organic substances, or by using hydrocarbons as a source in a chemical vapor deposition method.

The carbonized organic substances may include carbonized sucrose, glucose, galactose, fructose, lactose, mannose, ribose, aldohexose, or ketohexose, or a combination thereof.

The hydrocarbon may be a substituted or unsubstituted aliphatic or alicyclic hydrocarbon, or a substituted or unsubstituted aromatic hydrocarbon. The substituted or unsubstituted aliphatic or alicyclic hydrocarbon may be methane, ethane, ethylene, acetylene, propane, butane, butene, pentane, isobutane, or hexane. The substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, or phenanthrene.

In an embodiment of the present disclosure, the carbon layer may be included in an amount of about 0.1 parts by weight to 50 parts by weight, about 0.1 parts by weight to 30 parts by weight, or about 0.1 parts by weight to 20 parts by weight, based on 100 parts by weight of the silicon-based active material. For example, the carbon layer may be included in an amount of about 0.5 parts by weight to 15 parts by weight or about 1 part by weight to 10 parts by weight. When the above range is satisfied, conductivity is enhanced while enhancing capacity and efficiency of the silicon-based active material.

In an embodiment of the present disclosure, the carbon layer has a thickness of about 1 nm to 500 nm, for example, 5 nm to 300 nm, or 5 nm to 100 nm. When the above range is satisfied, conductivity of the silicon-based active material is improved, volume change of the silicon-based active material is effectively suppressed, and side reactions between the electrolyte and the silicon-based active material are suppressed, thereby improving initial efficiency and/or lifetime of the battery.

According to an embodiment, the carbon layer may be formed by a chemical vapor deposition (CVD) method using at least one hydrocarbon gas selected from methane, ethane, and acetylene.

According to another embodiment of the present disclosure, the Si/C (silicon-carbon composite) may be configured such that carbon is coated on a surface of silicon or silicon oxide particles by firing in a state where carbon is combined with the silicon or silicon oxide particles, or such that carbon is atomically dispersed inside silicon particles, or such that a core compounded with silicon and carbon is surrounded by graphite, graphene, or amorphous carbon.

According to an embodiment of the present disclosure, when the silicon-based active material includes Si/C, a Si:C atomic ratio on a surface of the silicon-based active material is about 1:1 to 1:4, for example, about 1:2 to 1:4 or 1:3 to 1:4. Since the silicon-based active material has a carbon layer on its surface, the carbon ratio is higher at the surface. Such an atomic ratio indicates that carbon coating on the surface of the silicon-based active material is sufficient, and the ratio may be measured by XPS. Adjustment of the atomic ratio may be achieved by controlling an amount of carbonization material or changing firing time during introduction of the carbon layer.

According to an embodiment of the present disclosure, when the silicon-based active material includes Si/C, a Si:C atomic ratio in the silicon-based active material may be about 0.9:1.1 to 1.1:0.9, for example, about 1:0.95 to 1:1.1. The range of the Si:C atomic ratio is advantageous for satisfying capacity, lifetime, and processability. The Si/C is mainly composed of two elements (Si and C). Thus, while excluding the influence of other elements, the C content may be measured using a CS analyzer, after which the Si content may be calculated by subtracting the C content from the total.

The Si/C may be produced by a method including a step of forming a core including the silicon-carbon composite and a step of forming a carbon layer on at least a portion of the core.

According to an embodiment, the step of forming the core including the silicon-carbon composite may be performed by etching carbon particles including internal pores (e.g., porous carbon) to expand the internal pores of the carbon particles, and forming silicon particles on surfaces and in the expanded internal pores of the carbon particles.

The step of expanding the internal pores of the carbon particles may be performed in a nitrogen (N₂) atmosphere, an oxygen (O₂) atmosphere, or an air atmosphere. For example, a flow rate of the oxygen (O₂) or the oxygen-containing air may be controlled to about 0.1 L/min to 10 L/min.

The step of expanding the internal pores of the carbon particles may be performed at a temperature of about 400 °C to 1,200 °C for 30 minutes to 4 hours.

Pore characteristics of the obtained porous carbon particles may vary depending on the conditions for expanding the internal pores of the carbon particles.

To expand the internal pores of the carbon particles, an etchant may be used, for example, an alkaline material such as KOH. For example, the carbon particles and KOH may be mixed in a weight ratio of about 1:1 to 1:5 to expand the internal pores of the carbon particles.

The step of forming the silicon particles may be performed by a chemical vapor deposition (CVD) method. In this case, silicon nanoparticles are deposited on surfaces and/or in internal pores of the expanded carbon particles, thereby forming a silicon coating layer in the form of a film, in the form of islands, or in a mixed form thereof.

The step of forming the silicon particles may be performed by introducing SiH₄/H₂ gas into a CVD apparatus at about 500 °C to 900 °C for deposition on the carbon particles, thereby forming the silicon-carbon composite.

The step of forming the carbon layer may be performed by a method using chemical vapor deposition (CVD) with a carbonaceous material, for example, a hydrocarbon gas, or by carbonizing a material serving as a carbon source.

For example, after introducing the core including the silicon-carbon composite into a reactor, a hydrocarbon gas may be subjected to chemical vapor deposition (CVD) at about 600 °C to 700 °C to form the carbon layer. The hydrocarbon gas may be at least one hydrocarbon gas selected from methane, ethane, propane, and acetylene.

In an embodiment of the present disclosure, the coating layer included in the negative electrode active material together with the silicon-based active material includes a metal oxide and an aqueous binder.

Since the metal oxide is characterized by high hardness, the coating layer including the metal oxide improves durability of the silicon-based active material and suppresses rapid volume expansion of the silicon-based active material during operation.

According to an embodiment of the present disclosure, the metal oxide may be represented by Formula 1:

[Formula 1] MₐO_{b} (1≤a≤2, 1≤b≤5)

In Formula 1, M is any one of Al, Ti, and Mg. When M in Formula 1 is any one of Al, Ti, and Mg, a coating layer may be formed on the silicon-based active material to mitigate volume expansion without degrading performance of a secondary battery. For example, when the metal oxide in Formula 1 includes Zn, Fe, Cu, Ni, Sn, Sb, Cr, Zr, or V, a short circuit may occur due to metal elution depending on an operating voltage range of the metal, resulting in a reduction in operating voltage of the battery. Therefore, M may be any one selected from Al, Ti, and Mg.

In an embodiment of the present disclosure, the metal oxide may include at least one selected from Al₂O₃, TiO₂, and MgO. When the metal oxide includes such components, a coating layer may be formed on the silicon-based active material to mitigate volume expansion without degrading performance of the secondary battery.

In an embodiment of the present disclosure, the metal oxide may include at least one selected from Al₂O₃, TiO₂, and MgO, and, for example, the metal oxide may be Al₂O₃.

According to an embodiment of the present disclosure, the metal oxide may have an average particle diameter (D50) of about 1 nm to 100 nm. For example, the average particle diameter (D50) of the metal oxide may be 1 nm or more, 2 nm or more, 100 nm or less, 80 nm or less, 50 nm or less, 30 nm or less, or 20 nm or less. When the average particle diameter (D50) of the metal oxide falls within the above range and the metal oxide is in the form of nanoparticles, a uniform coating layer may be formed on a surface of the active material without hindering migration of lithium ions in a cell operating environment.

The average particle diameter of the metal oxide is a volume average value of diameters obtained by converting respective metal oxide particles into spheres of the same volume (spherical-equivalent particle diameters), and the value may be determined by electron microscope observation. For example, when the metal oxide is observed with an electron microscope, the value may be obtained by measuring diameters of 200 or more metal oxide particles within a given field of view, calculating spherical-equivalent particle diameters of the respective particles, and averaging the calculated values.

The aqueous binder has flexibility and, when included in the coating layer, mitigates particle fracture even when particle volume expansion of the silicon-based active material occurs. Furthermore, since the aqueous binder is mixed with the metal oxide within the coating layer, adhesion between the silicon-based active material and the coating layer is improved.

In addition, during an aqueous process in preparation of a negative electrode slurry, gas such as hydrogen may be generated in the case of the silicon-based active material, resulting in process issues. However, the negative electrode active material according to an embodiment of the present disclosure includes the coating layer that blocks direct contact between the silicon-based active material core and an aqueous solvent (*e.g.*, distilled water), and thus gas generation in the slurry during the aqueous process may be reduced.

In the present disclosure, the aqueous binder included in the coating layer is distinct from a negative electrode binder described later. The aqueous binder according to an embodiment of the present disclosure is included in the coating layer provided on the silicon-based active material particles. For example, the aqueous binder is located in the coating layer surrounding the silicon-based active material, whereas the negative electrode binder described later is uniformly dispersed in a negative electrode active material layer and is observed among the negative electrode active material particles.

In an embodiment of the present disclosure, the aqueous binder may include at least one selected from polyacrylamide (PAM), polyacrylic acid (PAA), polyvinyl alcohol (PVA), polyethylene glycol (PEG), carboxymethyl cellulose (CMC), polyvinyl acetate (PVAc), polyvinylpyrrolidone (PVP), and substances in which hydrogen thereof is substituted with Li, Na, or Ca.

In an embodiment of the present disclosure, the aqueous binder may include at least one selected from polyacrylamide (PAM), polyacrylic acid (PAA), and substances in which hydrogen thereof is substituted with Li, Na, or Ca.

For example, the aqueous binder may include at least one selected from polyacrylamide (PAM) and substances in which hydrogen thereof is substituted with Li, Na, or Ca.

In an embodiment of the present disclosure, the aqueous binder may have a weight average molecular weight (Mw) of about 1,000 g/mol to 1,000,000 g/mol. For example, the aqueous binder may have a weight average molecular weight (Mw) of 1,000 g/mol or more, 10,000 g/mol or more, 50,000 g/mol or more, 100,000 g/mol or more, or 500,000 g/mol or more, and 1,000,000 g/mol or less, 800,000 g/mol or less, or 700,000 g/mol or less. When the weight average molecular weight of the aqueous binder falls within the above range, the aqueous binder may be uniformly dispersed in the coating layer.

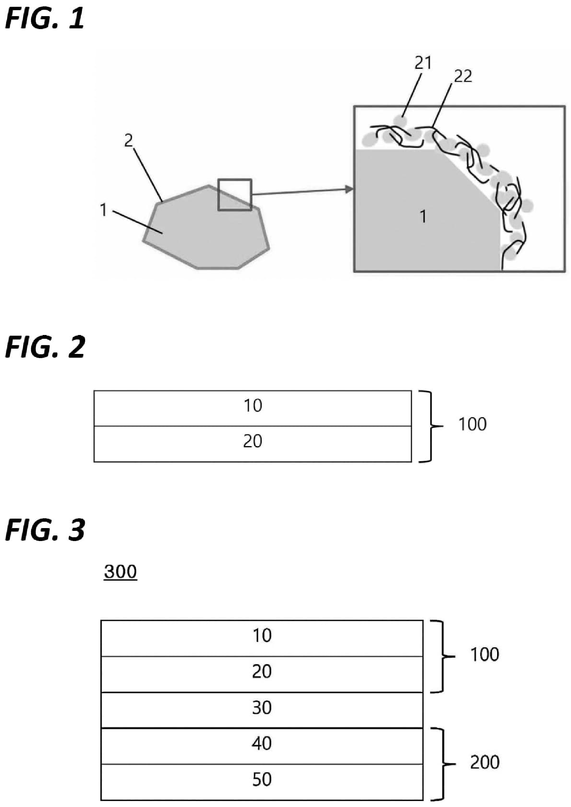

FIG. 1 illustrates a negative electrode active material according to an embodiment of the present disclosure. Referring to FIG. 1, a coating layer 2 is provided so as to surround at least a portion of a silicon-based active material 1, and the coating layer 2 includes a metal oxide 21 and an aqueous binder 22 mixed therein.

According to an embodiment of the present disclosure, the coating layer 2 is provided on at least a portion of the silicon-based active material 1, for example, on at least a portion of a surface of the silicon-based active material.

The coating layer 2 may be present on the silicon-based active material 1 in the form of an island-type layer or a thin-film-type layer, and is not limited thereto, but may be present in various forms.

In an embodiment of the present disclosure, since the coating layer 2 includes both the aqueous binder 22 and the metal oxide 21, adhesion between the silicon-based active material 1 and the coating layer 2 is superior, and a thin and uniform coating layer may be formed, compared with a case where the coating layer is formed using the metal oxide alone or the aqueous binder alone. When the coating layer 2 includes only the metal oxide 21, the metal oxide may not be uniformly dispersed, resulting in non-uniform formation. When the coating layer 2 includes only the aqueous binder 22, the coating layer may not be formed on the silicon-based active material 1.

According to an embodiment of the present disclosure, the coating layer 2 may include the metal oxide 21 and the aqueous binder 22 in a weight ratio of about 50:50 to 95:5, and for example, in a weight ratio of about 70:30 to 90:10. For example, the coating layer 2 may include the metal oxide 21 and the aqueous binder 22 in a weight ratio of 70:30 or more and 90:10 or less, or may be in a weight ratio of 85:15.

When the metal oxide 21 and the aqueous binder 22 are included within the above range, the coating layer 2 may sufficiently function as a resistor on a surface of the silicon-based active material 1, the coating layer may be uniformly formed, and battery performance may be improved.

Another feature of the present disclosure is that by optimizing the weight ratio of the metal oxide 21 and the aqueous binder 22 in the coating layer 2 as described above, performance degradation due to particle expansion of the silicon-based active material 1 may be prevented or suppressed while not affecting migration or behavior of lithium ions.

According to an embodiment of the present disclosure, the coating layer 2 may have an average thickness of about 100 nm to 1 µm. For example, the average thickness of the coating layer 2 may be 200 nm or more, 230 nm or more, 250 nm or more, or 280 nm or more, and 1 µm or less, 500 nm or less, or 400 nm or less. The fact that the average thickness of the coating layer 2 falls within the above range means that the coating layer 2 is provided on at least a portion of the silicon-based active material 1 and that 50% or more of the coating layer 2 has a thickness within the range.

When the average thickness of the coating layer 2 falls within the above range, exposure of the silicon-based active material 1 to the outside may be blocked or the physical resistance of the silicon-based active material itself may be increased, thereby preventing or suppressing deterioration caused by volume expansion and particle fracture of the silicon-based active material. In addition, when the thickness of the coating layer 2 falls within the above range, direct contact between the core of the silicon-based active material 1 and an aqueous solvent may be blocked, thereby reducing generation of undesired gas (*e.g.*, hydrogen (H₂) gas) in slurry during an aqueous process and improving processability.

The thickness of the coating layer 2 may be measured through cross-sectional analysis of a negative electrode including the negative electrode active material 1, and the cross-sectional analysis of the negative electrode may be performed using an ion milling apparatus. For example, an electrode sample may be milled using a Hitachi IM4000 apparatus. After irradiating the sample with an ion beam at 1.5 kV for about 3 to 4 hours per sample, a cross-sectional image may be measured using a Hitachi S-4800 SEM. Each particle observed in each SEM image obtained from the cross section may be measured, and an average value of the thickness of the coating layer 2 measured from each cross-sectional image, which is obtained by randomly selecting five regions of the cross section and capturing images at 10K magnification, may be used.

In an embodiment of the present disclosure, the negative electrode active material 1 may have an average particle diameter (D50) of about 1 µm to 20 µm. When the average particle diameter falls within the above range, the specific surface area of the particles may not excessively increase, and the viscosity of a negative electrode slurry may not excessively rise. Accordingly, dispersion of particles constituting the negative electrode slurry may be facilitated. In addition, when the average particle diameter falls within the above range, contact area among silicon particles and conductive materials is appropriately maintained by a composite of conductive material and binder in the negative electrode slurry, so that the conductive network is not disconnected and capacity retention is improved. Furthermore, when the average particle diameter falls within the above range, excessively large silicon particles may not be present, thereby smoothing a surface of the negative electrode and preventing non-uniformity of current density during charging and discharging. In addition, phase stability of the negative electrode slurry may be enhanced, improving processability. As a result, capacity retention of the battery may be improved.

The "average particle diameter (D50) of the negative electrode active material" is distinct from the "average particle diameter (D50) of the silicon-based active material," and refers to the average particle diameter (D50) of a final negative electrode active material in which a coating layer is provided on the silicon-based active material.

### Negative Electrode Composition

An embodiment of the present disclosure provides a negative electrode composition including a negative electrode active material according to an embodiment of the present disclosure.

The negative electrode composition may further include an additional negative electrode active material. As for the additional negative electrode active material, a compound capable of reversible intercalation and deintercalation of lithium may be used. Examples thereof include carbon-based materials such as artificial graphite, natural graphite, graphitized carbon fiber, and amorphous carbon; metallic compounds capable of being alloyed with lithium, such as Si, Al, Sn, Pb, Zn, Bi, In, Mg, Ga, Cd, Si alloys, Sn alloys, or Al alloys; metal oxides capable of doping and de-doping lithium, such as SiO_{β} (0<β<2), SnO₂, vanadium oxide, lithium titnanium oxide, lithium vanadium oxide; or composites containing the above metallic compounds and carbon-based materials, such as Si-C composites or Sn-C composites, and these may be used alone or in a mixture of two or more thereof. Additionally, a metal lithium thin film may also be used as the negative electrode active material. In addition, both low-crystalline carbon and high-crystalline carbon may be used as carbon materials. Representative examples of the low-crystalline carbon include soft carbon and hard carbon, and representative examples of the high-crystalline carbon include amorphous, plate, in-plane, spherical, or fibrous natural or artificial graphite, Kish graphite, pyrolytic carbon, mesophase pitch based carbon fiber, meso-carbon microbeads, mesophase pitches, and high temperature calcined carbon such as petroleum or coal tar pitch derived cokes.

An embodiment of the present disclosure provides a negative electrode composition further including a carbon-based active material as the negative electrode active material. The carbon-based active material includes at least one selected from natural graphite and artificial graphite.

According to an embodiment of the present disclosure, the additional negative electrode active material may be a carbon-based active material. The carbon-based active material may be graphite, and the graphite may include at least one selected from natural graphite and artificial graphite.

The carbon-based active material may be natural graphite, artificial graphite, or a mixture of natural graphite and artificial graphite.

The artificial graphite is generally prepared by carbonizing raw materials such as coal tar, coal tar pitch, or petroleum heavy oil at 2,500 °C or higher, and after graphitization, particle size is adjusted by processes such as pulverization and secondary particle formation to be used as a negative electrode active material. In the case of artificial graphite, crystals are randomly distributed within the particles, sphericity is lower compared to natural graphite, and the particles have a somewhat pointed shape.

In addition, the artificial graphite may have an average particle diameter (D50) of about 5 µm to 30 µm, for example, about 10 µm to 25 µm.

The natural graphite is generally in the form of a plate-like aggregate before processing, and the plate-like particles are processed by post-treatment such as pulverization and reassembly to obtain spherical particles with a smooth surface for use as an active material for electrode manufacture.

In addition, the natural graphite may have a particle diameter of about 5 µm to 30 µm, or about 10 µm to 25 µm.

When the carbon-based active material is a mixture of artificial graphite and natural graphite, a weight ratio of the artificial graphite to the natural graphite may be about 9.99:0.01 to 0.01:9.99, or about 9.7:0.3 to 7:3. When the weight ratio falls within the above range, superior output may be exhibited.

When the silicon-based negative electrode active material according to an embodiment of the present disclosure is referred to as a first negative electrode active material and the additional carbon-based negative electrode active material is referred to as a second negative electrode active material, the first negative electrode active material may be included in an amount of about 1 part by weight to 30 parts by weight, based on 100 parts by weight of a total of the first and second negative electrode active materials. For example, the first negative electrode active material may be included in an amount of 1 part by weight or more or 2 parts by weight or more, and 30 parts by weight or less, 25 parts by weight or less, 20 parts by weight or less, or 15 parts by weight or less, based on 100 parts by weight of the total of the first and second negative electrode active materials.

In an embodiment of the present disclosure, the second negative electrode active material may be included in an amount of about 70 parts by weight or more, based on 100 parts by weight of the total of the first and second negative electrode active materials. For example, the second negative electrode active material may be included in an amount of 70 parts by weight or more, 75 parts by weight or more, 80 parts by weight or more, 90 parts by weight or more, 98 parts by weight or more, or 99 parts by weight or more, and 100 parts by weight or less, less than 100 parts by weight, 99 parts by weight or less, 97 parts by weight or less, or 95 parts by weight or less, based on 100 parts by weight of the total of the first and second negative electrode active materials.

Since the first negative electrode active material, which is the silicon-based negative electrode active material 1 according to an embodiment of the present disclosure, includes the coating layer 2 that may prevent or suppress volume expansion and particle fracture during charge and discharge, the first negative electrode active material, which includes the silicon-based negative electrode active material 1 having a significantly high capacity, may be included within the above range. Accordingly, excellent output characteristics and capacity during charge and discharge may be achieved without degrading performance of the negative electrode.

In an embodiment of the present disclosure, the negative electrode composition further includes a negative electrode binder.

In an embodiment of the present disclosure, the negative electrode binder includes an aqueous binder.

In an embodiment of the present disclosure, the negative electrode binder may include at least one selected from polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene butadiene rubber (SBR), fluororubber, poly acrylic acid, polyacrylamide (PAM), and materials in which hydrogens thereof are substituted with Li, Na, or Ca, and may also include various copolymers thereof.

The negative electrode binder according to an embodiment of the present disclosure serves to hold the active material and the conductive material to prevent or suppress twisting or structural deformation of the negative electrode structure. A s long as such functions are satisfied, any general binder may be applied, and in an embodiment, an aqueous binder may be used.

In an embodiment of the present disclosure, the negative electrode binder includes an aqueous binder, and the negative electrode binder may be included in an amount of about 1 part by weight to 10 parts by weight, based on 100 parts by weight of the negative electrode composition.

In another embodiment of the present disclosure, the negative electrode binder may be included in an amount of about 1 part by weight or more, 2 parts by weight or more, or 2.5 parts by weight or more, and about 3 parts by weight or less, 5 parts by weight or less, 7 parts by weight or less, or 10 parts by weight or less, based on 100 parts by weight of the negative electrode composition.

In the negative electrode according to the present disclosure, the silicon-based negative electrode active material 1 or its modified form is used in the above-described parts by weight in order to maximize the capacity characteristics, which results in greater volume expansion during charge and discharge compared with a secondary battery employing only carbon-based active materials. Accordingly, by including the negative electrode binder in the above content range, the negative electrode binder may effectively restrain the volume expansion of the rigid silicon-based active material 1 during charging and discharging.

In an embodiment of the present disclosure, the negative electrode composition further includes a negative electrode binder and a negative electrode conductive material.

In an embodiment of the present disclosure, the conductive material may include at least one selected from particulate conductive material, flake-type conductive material, and fibrous conductive material.

In an embodiment of the present disclosure, the particulate conductive material may be used to improve the conductivity of the negative electrode, and refers to a spherical or particulate conductive material having conductivity without causing a chemical change. For example, the particulate conductive material may include at least one selected from natural graphite, artificial graphite, carbon black, acetylene black, Ketjen black, channel black, furnace black, lamp black, thermal black, conductive fibers, fluorocarbons, aluminum powder, nickel powder, zinc oxide, potassium titanate, titanium oxide, and polyphenylene derivatives, or may include carbon black in view of its ability to implement high conductivity and excellent dispersibility.

In an embodiment of the present disclosure, the particulate conductive material may have a BET specific surface area of about 40 m²/g to 70 m²/g, for example, about 45 m²/g to 65 m²/g, or about 50 m²/g to 60 m²/g.

In an embodiment of the present disclosure, the conductive material may include a flake-type conductive material.

The flake-type conductive material may serve to increase surface contact between silicon particles in the negative electrode to improve conductivity, while suppressing disconnection of conductive pathways due to volume expansion, and may be expressed as a plate-like conductive material or a bulk-type conductive material.

In an embodiment of the present disclosure, the flake-type conductive material may include at least one selected from plate-like graphite, graphene, graphene oxide, and graphite flakes, or may be plate-like graphite.

In an embodiment of the present disclosure, the average particle diameter (D50) of the flake-type conductive agent may be about 2 µm to 7 µm, for example, about 3 µm to 6 µm, or about 4 µm to 5 µm. When the above range is satisfied, the particle size is sufficient to facilitate dispersion without causing an excessive increase in viscosity of the negative electrode slurry. Therefore, the dispersion effect is excellent when dispersion is performed using the same equipment and time.

In an embodiment of the present disclosure, the flake-type conductive material may be a high-specific surface area surface-shaped conductive material having a high BET surface area; or a low-specific surface area surface-shaped conductive material.

In an embodiment of the present disclosure, a high-specific surface area flake-type conductive material or a low-specific surface area flake-type conductive material may be used without any limitation as the flake-type conductive material. However, since the flake-type conductive material according to the present disclosure may be affected to some extent by dispersion influence on electrode performance, a low-specific surface area flake-type conductive material that does not cause dispersion problems may be used.

In an embodiment of the present disclosure, the flake-type conductive material may have a BET specific surface area of about 5 m²/g or more.

In another embodiment, the flake-type conductive material may have a BET specific surface area of about 5 m²/g or more and 500 m²/g or less, for example, about 5 m²/g or more and 300 m²/g or less, or about 5 m²/g or more and 250 m²/g or less.

In another embodiment, the flake-type conductive material is a high-specific surface area flake-type conductive material, and may have a BET surface area in a range of about 50 m²/g to 500 m²/g, or, about 80 m²/g to 300 m²/g, or about 100 m²/g to 300 m²/g.

In yet another embodiment, the flake-type conductive material is a low-specific surface area surface-shaped conductive material, and may have a BET surface area in a range of about 5 m²/g to 40 m²/g, for example, about 5 m²/g to 30 m²/g, or about 5 m²/g to 25 m²/g.

Other conductive materials may include fibrous conductive materials such as carbon nanotubes. The carbon nanotubes may be bundle-type carbon nanotubes. The bundle-type carbon nanotubes may include a plurality of carbon nanotube units. Here, unless otherwise stated, the term "bundle type" refers to a secondary shape in the form of a bundle or rope in which a plurality of carbon nanotube units are arranged in a substantially same orientation in a parallel manner or entangled with the longitudinal axes of the carbon nanotube units. The carbon nanotube units have a cylindrical shape of a graphite sheet with a nano-sized diameter and an sp² bonding structure. At this time, depending on the angle and structure at which the graphite sheet is rolled, the characteristics of a conductor or a semiconductor may be exhibited. The bundle type carbon nanotubes may be uniformly dispersed during the manufacture of a negative electrode compared to entangled type carbon nanotubes, and may smoothly form a conductive network within the negative electrode, thereby improving the conductivity of the negative electrode.

In an embodiment of the present disclosure, the fibrous conductive material may include SWCNT or MWCNT.

In an embodiment of the present disclosure, a negative electrode composition is provided in which the negative electrode conductive material is present in an amount of about 0.01 parts by weight or more and 10 parts by weight or less based on 100 parts by weight of the negative electrode slurry.

In another embodiment, the negative electrode conductive material may be included in an amount of about 0.01 parts by weight or more, or 0.05 parts by weight or more, and about 10 parts by weight or less, 5 parts by weight or less, or 3 parts by weight or less, based on 100 parts by weight of the negative electrode composition.

The negative electrode conductive material according to the present disclosure has a composition completely different from that of a positive electrode conductive material applied to a positive electrode. For example, the negative electrode conductive material according to the present disclosure plays a role of holding the contact point between silicon-based active materials, which greatly expand the volume of the electrode due to charging and discharging, and the positive electrode conductive material plays a role of providing some conductivity while acting as a buffer when rolled, and is completely different in composition and role from the negative electrode conductive material of the present disclosure.

In addition, the negative electrode conductive material according to the present disclosure is applied to silicon-based active materials, and thus has a composition entirely different from that of conductive materials applied to negative electrode compositions including only graphite-based active materials. For example, the conductive material used in an electrode having a graphite-based active material simply has smaller particles compared to the active material, and thus has the characteristics of improving output characteristics and imparting some conductivity, and is completely different in composition and role from the negative electrode conductive material applied together with a silicon-based active material, as in the present disclosure.

### Negative Electrode

FIG. 2 illustrates a laminated structure of a negative electrode according to an embodiment of the present disclosure.

Referring to FIG. 2, a negative electrode 100 according to an embodiment of the present disclosure includes a negative electrode current collector layer 10 and a negative electrode active material layer 20 disposed on one or both surfaces of the negative electrode current collector layer 10, in which the negative electrode active material layer 20 includes a negative electrode composition according to an embodiment of the present disclosure.

FIG. 2 illustrates that the negative electrode active material layer 20 is formed on one surface of the negative electrode current collector layer 10. However, the present disclosure is not limited thereto, and for example, the negative electrode active material layer 20 may be formed on both surfaces of the negative electrode current collector layer 10.

In an embodiment of the present disclosure, the negative electrode 100 may be formed by applying and drying a negative electrode slurry containing the negative electrode composition to one side or both sides of the negative electrode current collector layer 10.

At this time, the negative electrode slurry may include the negative electrode composition and a slurry solvent.

In an embodiment of the present disclosure, the solid content of the negative electrode slurry may satisfy a range of about 5% to 60%. In another embodiment, the solid content of the negative electrode slurry may satisfy a range of about 5% to 60%, for example, about 7% to 50%, or about 10% to 50%.

The solid content of the negative electrode slurry may refer to the content of the negative electrode composition included in the negative electrode slurry, and may be expressed as the content of the negative electrode composition based on 100 parts by weight of the negative electrode slurry.

When the solid content of the negative electrode slurry is within the above range, the viscosity during formation of the negative electrode active material layer is appropriate, minimizing particle agglomeration of the negative electrode composition and allowing the negative electrode active material layer to be efficiently formed.

In an embodiment of the present disclosure, the slurry solvent may be used without limitation as long as it is capable of dissolving the negative electrode composition, and examples thereof may include water or NMP (N-methyl-2-pyrrolidone).

In an embodiment of the present disclosure, the negative electrode current collector layer 10 has a thickness of about 1 µm to 100 µm. The negative electrode current collector layer 10 is not particularly limited as long as it has high conductivity without causing chemical changes in the battery, and examples thereof include copper, stainless steel, aluminum, nickel, titanium, calcined carbon, copper or stainless steel surface-treated with carbon, nickel, titanium, or silver, and aluminum-cadmium alloy. In addition, the negative electrode collector layer may have fine unevenness formed on the surface to strengthen the bonding strength of the negative electrode active material, and may be used in various forms such as a film, sheet, foil, net, porous body, foam, and non-woven fabric.

In an embodiment of the present disclosure, the negative electrode 100 is provided such that the negative electrode current collector layer 10 has a thickness of about 1 µm to 100 µm or less, and the negative electrode active material layer 20 has a thickness of about 5 µm to 500 µm.

However, the thicknesses of the negative electrode current collector layer 10 and the negative electrode active material layer 20 may be variously modified depending on the type and use of the negative electrode 100, and are not limited thereto.

In an embodiment of the present disclosure, the porosity of the negative electrode active material layer 20 is not particularly limited, but may satisfy a range of about 10% to 60%.

In another embodiment, the porosity of the negative electrode active material layer 20 may be about 10% or more and 60% or less, for example, about 20% or more and 50% or less, or about 30% or more and 45% or less.

The porosity may vary depending on the composition and content of the negative electrode active material, conductive material, and binder included in the negative electrode active material layer 20. For example, the porosity may satisfy the above range by including the negative electrode active material and conductive material according to the present disclosure at specific compositions and contents, thereby providing the electrode with an appropriate range of electrical conductivity and resistance.

### Secondary Battery

FIG. 3 illustrates a laminated structure of a secondary battery according to an embodiment of the present disclosure.

Referring to FIG. 3, a secondary battery 300 according to an embodiment of the present disclosure includes a positive electrode 200, the negative electrode 100 according to an embodiment of the present disclosure, a separator 30 disposed between the positive electrode 200 and the negative electrode 100, and an electrolyte (not illustrated).

The secondary battery 300 according to an embodiment of the present disclosure includes the negative electrode 100 having a negative electrode active material layer 20 on one surface of a negative electrode current collector layer 10, and the positive electrode 200 having a positive electrode active material layer 40 on one surface of a positive electrode current collector layer 50. The positive electrode 200 and the negative electrode 100 are laminated with the separator 30 interposed therebetween.

The positive electrode 200 may include a positive electrode current collector and a positive electrode active material layer formed on the positive electrode current collector, the positive electrode active material layer including a positive electrode active material.

In the positive electrode 200, the positive electrode current collector is not particularly limited as long as it has conductivity without causing chemical changes in the battery, and examples thereof include stainless steel, aluminum, nickel, titanium, calcined carbon, and aluminum or stainless steel surface-treated with carbon, nickel, titanium, or silver. The positive electrode current collector may typically have a thickness of about 3 µm to 500 µm, and fine unevenness may be formed on the surface of the positive electrode current collector to strengthen the bonding strength of the positive electrode active material. For example, the positive electrode collector may be used in various forms, such as a film, a sheet, a foil, a net, a porous body, a foam, a non-woven body, and the like.

The positive electrode active material may be a commonly used positive electrode active material. For examle, the positive electrode active material may be a layered compound such as lithium cobalt oxide (LiCoO₂), lithium nickel oxide (LiNiO₂), or a compound substituted with one or more transition metals; lithium iron oxide such as LiFe₃O₄; lithium manganese oxide such as Li_{1+c}1Mn_{2-c1}O₄ (0≤c1≤0.33), LiMnO₃, LiMn₂O₃, and LiMnO₂; lithium copper oxide (Li₂CuO₂); vanadium oxide such as LiV₃O₈, V₂O₅, and Cu₂V₂O₇; Ni-site type lithium nickel oxide expressed by the chemical formula LiNi_{1-c2}M_{c2}O₂ (wherein, M is at least one selected from Co, Mn, Al, Cu, Fe, Mg, B, and Ga, and satisfies 0.01≤c2≤0.3); a lithium manganese composite oxide represented by the chemical formula LiMn_{2-c3}M_{c3}O₂ (wherein, M is at least one selected from Co, Ni, Fe, Cr, Zn, and Ta, and satisfies 0.01≤c3≤0.1) or Li₂Mn₃MO₈ (wherein, M is at least one selected from Fe, Co, Ni, Cu, and Zn); LiMn₂O₄, in which a part of Li in the chemical formula is replaced with an alkaline earth metal ion; but the present disclosure is not limited thereto. According to an embodiment, the positive electrode may be Li-metal.

The positive electrode active material layer may include a positive electrode conductive material and a positive electrode binder together with the positive electrode active material described above.

The positive electrode conductive material used to impart conductivity to the electrode may be any material that is electrically conductive without causing chemical changes in the battery to be constructed, without any particular limitation. Examples thereof include graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used alone or in mixture of two or more thereof.

In addition, the positive electrode binder serves to improve the adhesion between positive electrode active material particles and the adhesive strength between the positive electrode active material and the positive electrode current collector. Examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, which may be used alone or in mixture of two or more thereof.

The separator 30 separates the negative electrode 100 and the positive electrode 200 and provides a migration passage for lithium ions. Any separator that is usually used as a separator in secondary batteries may be used without special restrictions, and any material having low resistance to ion migration in the electrolyte and excellent electrolyte moisture retention capacity may be used. For example, the separator may be a porous polymer film, for example, a porous polymer film made of a polyolefin polymer such as ethylene homopolymer, propylene homopolymer, ethylene/butene copolymer, ethylene/hexene copolymer, and ethylene/methacrylate copolymer, or a laminated structure of two or more layers thereof. In addition, a conventional porous non-woven fabric, for example, a non-woven fabric made of high-melting-point glass fiber, polyethylene terephthalate fiber, etc. may be used. In addition, a coated separator containing a ceramic component or a polymer material may be used to secure heat resistance or mechanical strength, and may be selectively used in a single-layer or multilayer structure.

The electrolyte used in the present disclosure may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like that may be used in the manufacture of a lithium secondary battery 300.

The electrolyte may include a non-aqueous organic solvent and a metal salt.

Examples of the non-aqueous organic solvent include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolan, formamide, dimethylformamide, dioxolan, acetonitrile, nitromethane, methyl formate, methyl acetate, triester phosphoric acid, trimethoxy methane, dioxolan derivatives, sulfolane, methyl sulfolane, 1,3-dimethyl-2-imidazolidinone, propylene carbonate derivatives, tetrahydrofuran derivatives, ethers, methyl pyrropionate, and ethyl propionate.

Among the carbonate-based organic solvents, cyclic carbonates such as ethylene carbonate and propylene carbonate are viscous organic solvents having high dielectric constants, and may be preferably used since they dissociate lithium salts effectively. When such cyclic carbonates are mixed with linear carbonates having low viscosity and low dielectric constants, such as dimethyl carbonate and diethyl carbonate, an electrolyte with high conductivity may be obtained.

The metal salt may be a lithium salt, and the lithium salt is a substance that is easily dissolved in the non-aqueous electrolyte. For example, an anion of the lithium salt may be at least one selected from F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In addition to the electrolyte components, the electrolyte may further contain one or more additives, such as, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of the battery, suppressing battery capacity decrease, and improving the discharge capacity of the battery.

### Battery Module and Battery Pack

An embodiment of the present disclosure provides a battery module including the secondary battery 300 according to an embodiment of the present disclosure.

An embodiment of the present disclosure provides a battery pack including the secondary battery 300 according to an embodiment of the present disclosure.

An embodiment of the present disclosure provides a battery pack including the battery module according to an embodiment of the present disclosure.

An embodiment of the present disclosure provides a battery module including the secondary battery 300 as a unit cell, and a battery pack including the secondary battery 300 or the battery module. Since the battery module and the battery pack include the secondary battery 300 having high capacity, high rate characteristics, and cycle characteristics, they may be used as a power source for medium- and large-sized devices selected from electric vehicles, hybrid electric vehicles, plug-in hybrid electric vehicles, and power storage systems.

Hereinafter, examples are presented to assist in the understanding of the present disclosure, but the examples are merely illustrative of the disclosure, and it will be apparent to those skilled in the art that various modifications and alterations may be made within the spirit and scope of the present disclosure. It is, of course, understood that such modifications and alterations fall within the scope of the appended claims.

### <Preparation Example>

### <Example 1>

### 1) Preparation of Negative Electrode Active Material

Aluminum oxide (Al₂O₃, average particle diameter (D50) = 11 nm) was prepared as the metal oxide, and polyacrylamide (PAM, weight average molecular weight (Mw) = 650,000 g/mol) was prepared as the aqueous binder at a metal oxide : aqueous binder ratio of 80:20 parts by weight. The metal oxide, the aqueous binder, and a silicon-based active material (pure Si powder, average particle diameter (D50) = 2.95 µm) were prepared at a weight ratio of 95:4:1, and introduced into distilled water as a solvent to form a coating composition. The coating composition was charged into a ball mill apparatus (Planetary Ball Mill, Pulverisette 5, manufactured by Laval Lab) and subjected to wet milling at 1,000 rpm for 6 hours. After wet milling, the coating composition was filtered, and the obtained solid material was vacuum-dried at 120 °C for 24 hours to remove residual solvent from the surface, thereby producing a powder-type negative electrode active material in which a coating layer was formed on the surface of the silicon-based active material.

The produced negative electrode active material had an average particle diameter (D50) of 3.7 µm, and the average thickness of the coating layer was 350 nm.

### 2) Preparation of Negative Electrode Slurry

A negative electrode active material obtained in Preparation 1) of Example 1 was used as the first negative electrode active material, while natural graphite (average particle diameter (D50) = 17 µm) was used as the second negative electrode active material. The two were mixed at a ratio of 5:95 to prepare a negative electrode active material mixture. Based on 100 parts by weight of the negative electrode composition, 96 parts by weight of the negative electrode active material mixture, 0.85 parts by weight of SWCNT (single-walled carbon nanotubes) as a conductive material, and 1.7 parts by weight of polyacrylamide (PAM), 1.4 parts by weight of SBR, and 0.05 parts by weight of CMC (a total of 3.15 parts by weight of binder) as binders were prepared, and the components were added to distilled water as a solvent to prepare a negative electrode slurry having a solid content of 46 wt%.

For example, SWCNT, PAM, SBR, and CMC were dispersed in distilled water using a homo mixer (2,500 rpm, 30 minutes). Thereafter, the negative electrode active material mixture was added, followed by dispersion at 2,500 rpm for 30 minutes, to prepare the negative electrode slurry.

The SWCNT used had a BET specific surface area of 1,000 to 1,500 m²/g and an aspect ratio of 10,000 or more, and was used in the form of a solution dispersed in carboxymethyl cellulose (CMC).

The PAM was in an aqueous form, with a weight average molecular weight (Mw) of 500,000 g/mol to 800,000 g/mol and a number average molecular weight (Mn) of 100,000 to 400,000, providing a PDI value of 10 to 30. The weight average molecular weight and number average molecular weight of the aqueous binder were measured using aqueous gel permeation chromatography (GPC).

### 3) Preparation of Negative Electrode

As a negative electrode current collector layer, the negative electrode slurry was coated on both sides of a copper current collector (thickness: 15 µm) with a loading amount of 189 mg/25 cm², rolled, and dried in a vacuum oven at 130 °C for 10 hours to form a negative electrode active material layer, thereby preparing a negative electrode (thickness of negative electrode: 65 µm).

### 4) Preparation of Secondary Battery

LiNi_{0.6}Co_{0.2}Mn_{0.2}O₂ (average particle size (D50): 15 µm) as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry at a weight ratio of 97:1.5:1.5 to prepare a positive electrode slurry (solid content concentration: 78 wt%).

The positive electrode slurry was coated on both sides of an aluminum current collector (thickness: 12 µm) as a positive electrode collector at a loading amount of 537 mg/25 cm², rolled (roll pressed), and dried in a vacuum oven at 130 °C for 10 hours to form a positive electrode active material layer, thereby preparing a positive electrode (positive electrode thickness: 75 µm).

A lithium secondary battery was prepared by interposing a polyethylene separator between the positive electrode and the negative electrode and injecting an electrolyte.

The electrolyte was an organic solvent prepared by mixing fluoroethylene carbonate (FEC) and diethyl carbonate (DEC) in a volume ratio of 10:90, adding vinylene carbonate (VC) thereto at 3 wt% based on the total weight of the electrolyte, and adding LiPF₆ as a lithium salt at a concentration of 1 M.

### <Example 2>

A secondary battery was prepared in the same manner as in Example 1, except that, in 1) Preparation of Negative Electrode Active Material, the mixing ratio of the metal oxide to the aqueous binder was adjusted to 70:30 parts by weight. The negative electrode active material prepared in 1) Preparation of Negative Electrode Active Material exhibited an average particle size (D50) of 3.7 µm and an average coating layer thickness of 350 nm.

### <Example 3>

A secondary battery was prepared in the same manner as in Example 1, except that, in 1) Preparation of Negative Electrode Active Material, the mixing ratio of the metal oxide to the aqueous binder was adjusted to 90:10 parts by weight. The negative electrode active material prepared in 1) Preparation of Negative Electrode Active Material exhibited an average particle size (D50) of 3.6 µm and an average coating layer thickness of 300 nm.

### <Example 4>

A secondary battery was prepared in the same manner as in Example 1, except that, in 1) Preparation of Negative Electrode Active Material, the mixing ratio of the metal oxide to the aqueous binder was adjusted to 60:40 parts by weight. The negative electrode active material prepared in 1) Preparation of Negative Electrode Active Material exhibited an average particle size (D50) of 3.7 µm and an average coating layer thickness of 350 nm.

### <Example 5>

A secondary battery was prepared in the same manner as in Example 1, except that, in 1) Preparation of Negative Electrode Active Material, the mixing ratio of the metal oxide to the aqueous binder was adjusted to 95:5 parts by weight. The negative electrode active material prepared in 1) Preparation of Negative Electrode Active Material exhibited an average particle size (D50) of 3.5 µm and an average coating layer thickness of 300 nm.

### <Comparative Example 1>

A secondary battery was prepared in the same manner as in Example 1, except that, in 1) Preparation of Negative Electrode Active Material, a silicon-based active material (pure Si powder, average particle size (D50) = 2.95 µm) was used as the negative electrode active material. For example, Comparative Example 1 employed a silicon-based active material without a coating layer, as the negative electrode active material.

### <Comparative Example 2>

Aluminum oxide (Al₂O₃, average particle size (D50) = 11 nm) was prepared as the metal oxide. The metal oxide and a silicon-based active material (pure Si powder, average particle diameter (D50) = 2.95 µm) were prepared at a weight ratio of 95:5, and introduced into distilled water as a solvent to form a coating composition. The coating composition was charged into a ball mill apparatus (Planetary Ball Mill, Pulverisette 5, manufactured by Laval Lab) and subjected to wet milling at 1,000 rpm for 6 hours. After wet milling, the coating composition was filtered, and the obtained solid material was vacuum-dried at 120 °C for 24 hours to remove residual solvent from the surface, thereby producing a powder-type negative electrode active material in which a coating layer was formed on the surface of the silicon-based active material. The prepared negative electrode active material exhibited an average particle size (D50) of 3.1 µm, and the coating layer was formed non-uniformly, having an average thickness of 50 nm.

Thereafter, a secondary battery was prepared in the same manner as in Example 1. For example, Comparative Example 2 employed a negative electrode active material having a coating layer that did not include an aqueous binder.

### <Comparative Example 3>

Polyacrylamide (PAM, weight average molecular weight (Mw) = 650,000 g/mol) was prepared as the aqueous binder. The aqueous binder and a silicon-based active material (pure Si powder, average particle diameter (D50) = 2.95 µm) were prepared at a weight ratio of 95:5, and introduced into distilled water as a solvent to form a coating composition. The coating composition was charged into a ball mill apparatus (Planetary Ball Mill, Pulverisette 5, manufactured by Laval Lab) and subjected to wet milling at 1,000 rpm for 6 hours. After wet milling, the coating composition was filtered, and the obtained solid material was vacuum-dried at 120 °C for 24 hours to remove residual solvent from the surface, thereby producing a powder-type negative electrode active material in which a coating layer was formed on the surface of the silicon-based active material. The prepared negative electrode active material exhibited an average particle size (D50) of 3 µm, and the coating layer was hardly observed on the surface of the silicon-based active material, so the thickness of the coating layer could not be measured.

Thereafter, a secondary battery was prepared in the same manner as in Example 1. For example, Comparative Example 3 employed a negative electrode active material having a coating layer that did not include a metal oxide.

### <Example 6 >

A 0.5 M sucrose aqueous solution was placed in an autoclave and reacted at 180 °C for 24 hours to synthesize spherical particles. The resulting carbon particles were washed with ethanol two to three times and dried at 100 °C for at least 12 hours. The dried carbon particles were then mixed with KOH at a weight ratio of 1:3 and heated under a nitrogen atmosphere at 800 °C for 2 hours to expand the pores, thereby preparing porous carbon. Afterward, the porous carbon was washed with distilled water, dried at 100 °C for at least 12 hours, and placed in the hot zone of a CVD apparatus with an oxide layer formed thereon. Then, SiH₄/H₂ = 5/95 gas was flowed at a rate of 50 ml/min at 600 °C for 2 hours to deposit silicon inside the porous carbon, thereby producing Si/C (silicon-carbon composite). Subsequently, the Si/C composite was placed in the hot zone of the CVD apparatus, and methane was introduced into the hot zone at 700 °C for 1 hour using argon as a carrier gas to form a carbon layer on the surface, thereby preparing a silicon-based active material Si/C including a surface carbon layer (average particle size (D50): 8.1 µm).

Thereafter, a secondary battery was prepared in the same manner as in Example 1, except that, in 1) Preparation of Negative Electrode Active Material, the silicon-based active material prepared as described above (Si/C) was used instead of pure Si powder. The produced negative electrode active material had an average particle diameter (D50) of 8.6 µm, and the average thickness of the coating layer was 270 nm.

### <Example 7>

A secondary battery was prepared in the same manner as in Example 6, except that, in 1) Preparation of Negative Electrode Active Material of Example 6, the mixing ratio of the metal oxide to the aqueous binder was adjusted to 70:30 parts by weight. The negative electrode active material prepared in 1) Preparation of Negative Electrode Active Material exhibited an average particle size (D50) of 8.7 µm and an average coating layer thickness of 300 nm.

### <Example 8>

A secondary battery was prepared in the same manner as in Example 6, except that, in 1) Preparation of Negative Electrode Active Material of Example 6, the mixing ratio of the metal oxide to the aqueous binder was adjusted to 90:10 parts by weight. The negative electrode active material prepared in 1) Preparation of Negative Electrode Active Material exhibited an average particle size (D50) of 8.7 µm and an average coating layer thickness of 280 nm.

### <Example 9>

A secondary battery was prepared in the same manner as in Example 6, except that, in 1) Preparation of Negative Electrode Active Material pf Example 6, the mixing ratio of the metal oxide to the aqueous binder was adjusted to 95:5 parts by weight. The negative electrode active material prepared in 1) Preparation of Negative Electrode Active Material exhibited an average particle size (D50) of 8.6 µm and an average coating layer thickness of 230 nm.

### <Comparative Example 4>

A secondary battery was prepared in the same manner as in Example 6, except that, in 1) Preparation of Negative Electrode Active Material of Example 6, a silicon-based active material (Si/C, average particle size (D50) = 8.1 µm) was used as the negative electrode active material. For example, Comparative Example 4 employed a silicon-based active material without a coating layer, as the negative electrode active material.

### <Comparative Example 5>

A secondary battery was prepared in the same manner as in Comparative Example 2, except that the silicon-based active material was Si/C prepared in Example 6, instead of pure Si powder.

The prepared negative electrode active material exhibited an average particle size (D50) of 8.2 µm, and the coating layer was formed non-uniformly, having an average thickness of 70 nm. Thereafter, a secondary battery was prepared in the same manner as in Example 6. For example, Comparative Example 5 employed a negative electrode active material having a coating layer that did not include an aqueous binder.

### <Comparative Example 6>

A secondary battery was prepared in the same manner as in Comparative Example 3, except that the silicon-based active material was Si/C prepared in Example 6, instead of pure Si powder.

The prepared negative electrode active material exhibited an average particle size (D50) of 8.1 µm, and the coating layer was hardly observed on the surface of the silicon-based active material, so the thickness of the coating layer could not be measured.

### Experimental Example 1: Evaluation of Capacity Retention

The secondary batteries prepared in Examples and Comparative Examples were subjected to a life evaluation using an electrochemical charge/discharge test, and the capacity retention was evaluated. The secondary batteries were subjected to an in-situ cycle test under conditions of charging at 1C and discharging at 1C within a voltage range of 4.2-2.5 V. The test was terminated after 200 discharge cycles. In addition, every 50 cycles, charge/discharge at 0.33C/0.33C within a voltage range of 4.2-2.5 V was performed to measure the capacity retention, the results of which are shown in Tables 1 and 2. 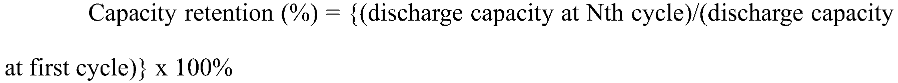 Capacity retention (%) = {(discharge capacity at Nth cycle)/(discharge capacity at first cycle)} x 100%

### Experimental Example 2: Evaluation of Aqueous Processability of Slurry

The aqueous processability of the slurry was evaluated for the negative electrode slurries prepared in Examples and Comparative Examples by placing each negative electrode slurry in a cell case and measuring the variation in gas generation after high-temperature storage.

For example, each negative electrode slurry was placed in a cell case and stored in a thermostatic chamber at 60 °C for 3 days. After the 3-day storage, the volume deviation before and after storage was measured. The volume of the generated gas was calculated by converting the mass difference measured from the negative electrode slurry into volume based on Archimedes' principle, and the amount of generated gas is shown in Tables 1 and 2. 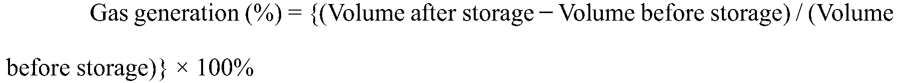 Gas generation (%) = {(Volume after storage - Volume before storage) / (Volume before storage)} × 100%

**[Table 1]**

| | Type of silicon-based active material | Coating layer metal oxide : aqueous binder (weight ratio) | Coating layer thickness (nm) | Capacity retention (%) | Gas generation (%) |
|---|---|---|---|---|---|
| Example 1 | Pure Si | 80:20 | 300 | 68 | 0 |
| Example 2 | Pure Si | 70:30 | 350 | 65 | 0 |
| Example 3 | Pure Si | 90:10 | 300 | 66 | 0 |
| Example 4 | Pure Si | 60:40 | 350 | 62 | 0 |
| Example 5 | Pure Si | 95:5 | 250 | 63 | 0 |
| Comparative Example 1 | Pure Si | - | - | 60 | 8.9 |
| Comparative Example 2 | Pure Si | 100:0 | 50 | 58 | 6.7 |
| Comparative Example 3 | Pure Si | 0:100 | Not formed | 61 | 8.3 |

Referring to Table 1, Examples 1 to 5 including the silicon-based negative electrode active material according to an embodiment of the present disclosure exhibited a capacity retention of about 62% to 68% and a gas generation of 0%. In contrast, Comparative Examples 1 to 3 showed a capacity retention of about 58% to 61% and a gas generation of 6.7% to 8.9%. Accordingly, it can be confirmed that Examples 1 to 5 exhibited superior capacity retention and gas generation characteristics compared to Comparative Examples 1 to 3.

**[Table 2]**

| | Type of silicon-based active material | Coating layer metal oxide : aqueous binder (weight ratio) | Coating layer thickness (nm) | Capacity retention (%) | Gas generation (%) |
|---|---|---|---|---|---|
| Example 6 | Deposited Si/C | 80:20 | 270 | 99.1 | 0 |
| Example 7 | Deposited Si/C | 70:30 | 300 | 98.3 | 0 |
| Example 9 | Deposited Si/C | 90:10 | 280 | 97.7 | 0 |
| Example 9 | Deposited Si/C | 95:5 | 230 | 96.8 | 0 |
| Comparative Example 4 | Deposited Si/C | - | - | 96.1 | 23 |
| Comparative Example 5 | Deposited Si/C | 100:0 | 70 | 95.5 | 12 |
| Comparative Example 6 | Deposited Si/C | 0:100 | Not formed | 95.8 | 20 |

Referring to Table 2, Examples 6 to 9 including the negative electrode active material according to an embodiment of the present disclosure exhibited a capacity retention of about 96.8% to 99.1% and a gas generation of 0%. In contrast, Comparative Examples 4 to 6 showed a capacity retention of about 95.5% to 96.1% and a gas generation of 12% to 23%. Accordingly, it can be confirmed that Examples 6 to 9 exhibited superior capacity retention and gas generation characteristics compared to Comparative Examples 4 to 6.

Referring to Tables 1 and 2, in Comparative Examples 1 and 4, in which silicon-based active materials without a separate coating layer formation process were used, inferior capacity retention and gas generation were observed. For example, in terms of gas generation, the amount of gas generation was relatively high in Comparative Example 1 compared with Comparative Examples 2 and 3, and likewise in Comparative Example 4 compared with Comparative Examples 5 and 6. This result is understood to be due to the direct contact between the silicon-based active material and the aqueous solvent, which caused significant gas (*e.g.*, H₂ gas) generation in the slurry during the aqueous process.

In Comparative Examples 2 and 5, silicon-based active materials coated only with metal oxides were used, and because the coating layers did not include an aqueous binder, the coating layers were formed non-uniformly on the silicon-based active material surfaces. In addition, in Comparative Examples 3 and 6, silicon-based active materials coated only with an aqueous binder were used, and because the coating layers did not include metal oxides, almost no coating layers were formed on the silicon-based active material surfaces, and the coating thickness could not be measured. Accordingly, in Comparative Examples 2, 3, 5, and 6, the coating layers did not sufficiently function as resistive layers, resulting in inferior capacity retention, and the insufficient coating layers caused excessive gas generation during the aqueous process.

In Examples 1 to 3, it is confirmed that superior capacity retention was exhibited even in comparison with Examples 4 and 5. In addition, in Examples 6 to 8, it is confirmed that superior capacity retention was exhibited even in comparison with Example 9. From this, it can be confirmed that, when the contents of the metal oxide and the aqueous binder in the coating layers are adjusted to optimal levels, uniform coating layers are formed on the silicon-based active material surfaces. In Example 4, it is understood that the relatively low content of metal oxides in the coating layer caused the coating layer to fail to sufficiently function as a resistive layer. In addition, in Examples 5 and 9, it is understood that the relatively low content of aqueous binder in the coating layer reduced the flexibility of the coating layer, causing particle fracture due to volume change during charge and discharge, and consequently lowering the capacity retention due to the generation of by-products.

While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

## Claims

1. A negative electrode active material comprising:
a silicon-based active material; and
a coating layer provided on the silicon-based active material,
wherein the coating layer includes a metal oxide and an aqueous binder.

2. The negative electrode active material according to claim 1, wherein the silicon-based active material includes at least one selected from Si, SiOₓ (0<x<2), Si/C, and Si-alloy.

3. The negative electrode active material according to claim 2, wherein the silicon-based active material includes Si, and
the Si is included in an amount of about 70 parts by weight or more based on 100 parts by weight of the silicon-based active material.

4. The negative electrode active material according to claim 1, wherein the silicon-based active material includes Si/C.

5. The negative electrode active material according to claim 4, wherein the Si/C includes porous carbon and silicon deposited on the porous carbon.

6. The negative electrode active material according to claim 1, wherein the metal oxide is represented by Formula 1:
[Formula 1] MₐO_{b} (1≤a≤2, 1≤b≤5)
wherein M is any one of Al, Ti, and Mg.

7. The negative electrode active material according to claim 1, wherein the metal oxide includes at least one selected from Al₂O₃, TiO₂, and MgO.

8. The negative electrode active material according to claim 1, wherein the aqueous binder includes at least one selected from polyacrylamide (PAM), polyacrylic acid (PAA), polyvinyl alcohol (PVA), polyethylene glycol (PEG), carboxymethyl cellulose (CMC), polyvinyl acetate (PVAc), polyvinylpyrrolidone (PVP), and substances in which hydrogen thereof is substituted with Li, Na, or Ca.

9. The negative electrode active material according to claim 1, wherein the coating layer includes the metal oxide and the aqueous binder in a weight ratio of about 70:30 to 90:10.

10. The negative electrode active material according to claim 1, wherein an average particle diameter (D50) of the negative electrode active material is about 1 µm to 20 µm.

11. The negative electrode active material according to claim 1, wherein an average thickness of the coating layer is about 100 nm to 1 µm.

12. A negative electrode composition comprising the negative electrode active material according to anyone of claims 1 to 11.

13. The negative electrode composition according to claim 12, wherein the negative electrode active material further includes a carbon-based active material.

14. The negative electrode composition according to claim 13, wherein the carbon-based active material includes at least one selected from natural graphite and artificial graphite.

15. The negative electrode composition according to claim 13, wherein the carbon-based active material is included in an amount of about 70 parts by weight or more based on 100 parts by weight of the negative electrode active material.

16. The negative electrode composition according to claim 12, further comprising:
a negative electrode binder,
wherein the negative electrode binder includes an aqueous binder.

17. A negative electrode comprising:
a negative electrode current collector layer; and
a negative electrode active material layer provided on one surface or both surfaces of the negative electrode current collector layer,
wherein the negative electrode active material layer includes the negative electrode composition according to claim 12.

18. A secondary battery comprising:
a positive electrode; and
the negative electrode according to claim 17.

19. A battery module comprising the secondary battery according to claim 18.

20. A battery pack comprising the secondary battery according to claim 18.
